# EUROPEAN PATENT APPLICATION

(11) **EP 4 361 207 A1**
(43) Date of publication of application: **01.05.2024**
(21) Application number: 23205576.4
(22) Date of filing: 24.10.2023
(51) Int. Cl.: C08K 3/22, C08L 83/04

(54) **THERMALLY CONDUCTIVE SILICONE COMPOSITION**

(30) Priority: 26.10.2022 US 202263419503 P
(71) Applicant: Solaredge Technologies Ltd., Herzeliya 4673335 (IL)
(72) Inventor: NAOR POMERANTZ, Adi, 4673335 Herzeliya (IL); SHANNY, Shira, 4673335 Herzeliya (IL); BLASS, Nir, 4673335 Herzeliya (IL); LIBERMAN, Elnatan, 4673335 Herzeliya (IL)
(74) Representative: V.O.

(57) **Abstract**

There is provided a thermally conductive silicone composition including a silicone matrix and a heat transfer filler, and a thermal paste obtainable by mixing and/or curing the composition components. Further provided is an electronic device or component including the thermal paste. The silicone matrix includes a polyorganosiloxane containing two silicon-bonded terminal alkenyl groups per molecule, trimethylsiloxane terminated (methylhydrosiloxane - dimethylsiloxane) copolymer, and a trimethylsiloxy terminated polydimethylsiloxane that is present in a weight percent of at least about 20 wt.%, based on the total weight of the silicone matrix. The heat transfer filler contains a ceramic powder having a thermal conductivity of at least about 10 W/mK and the weight ratio between the heat transfer filler and the silicone matrix is above 11: 1.

## Description

### BACKGROUND

The present disclosure relates to a thermally conductive silicone composition comprising a silicone matrix and a heat transfer filler.

Thermally conductive silicone compositions are widely used in electronic devices to dissipate heat away from the component and the surrounding equipment. Modern devices generate substantial amounts of heat due to their miniature sizes and high power. It is important to reduce the temperature of the devices in order to prevent damage to the electronic components, prolong the service life of the equipment, and reduce energy consumption. Even when electronic components that generate heat are bound to heat sinks that dissipate heat, there may be a mismatch between the bonded surfaces (e.g., due to unevenness and gaps between the bonded surfaces on the microscopic level), leading to the creation of an air layer that prevents sufficient heat dissipation. Thermally conductive silicone compositions are therefore typically added between the heat generating components and heat sinks.

Thermally conductive silicone compositions generally contain a curable polyorganosiloxane-based matrix that may be cured by physical and/or chemical means, such as, *inter alia,* heating or using a catalyst. Curing typically results in formation of a fully or partially crosslinked silicone polymer. The thermally conductive silicone composition may further comprise a heat transfer filler, since polymeric silicone itself is not sufficiently thermally conductive. Various ceramic and metallic powders may be used as a heat transfer filler, such as, *inter alia,* aluminum, copper, nickel, alumina, titanium oxide, and boron nitride. The heat transfer filler may be homogeneously dispersed throughout the silicone matrix to allow even heat dissipation. The cured composition may be used in a variety of forms, including pastes, cured pads, gels, adhesives, gap fillers, phase change materials, and greases. The choice of the particular product depends on the electronic component vis-à-vis which temperature needs to be controlled and the desired dispensing method.

### BRIEF SUMMARY OF THE INVENTION

The following presents a simplified summary of disclosed aspects in order to provide a basic understanding of these aspects. This summary is not an extensive overview of the aspects. It is not intended to identify key or critical elements or to delineate the scope of the disclosure.

Aspects of the disclosure relate to thermally conductive silicone compositions comprising a silicone matrix and a heat transfer filler, and to a thermal paste obtainable by mixing and/or curing the composition components. Further provided is an electronic component or device comprising the thermal paste. The thermally conductive silicone compositions according to the principles of the present invention are characterized by enhanced thermal conductivity and flowability, providing for convenient handling in multiple application settings, as well as efficient heat dissipation ability. The thermally conductive silicone compositions may further offer improved adhesion and enhanced stability over time, thereby enabling prolonged service life of the electronic devices employing said compositions. As used herein, the term "heat transfer filler" means an additive to the silicon matrix, wherein the additive has a thermal conductivity greater than the thermal conductivity of the silicon matrix.

Two main conditions that should preferably be fulfilled by thermally conductive compositions are high thermal conductivity and high flow rate. High thermal conductivity may be achieved by increasing the relative amount of the heat transfer filler within the composition. However, increasing the solid content of the composition typically leads to a decrease in the flowability, negatively affecting its spreadability and other handling-related properties. Inventors of the present invention have surprisingly found that addition of an inert silicone-based component that does not participate in the curing (e.g., crosslinking) of the curable components to the silicone matrix allows one to use substantially high amounts of the heat transfer filler without decreasing flow rate of the composition.

The silicone matrix comprises a polyorganosiloxane containing two silicon-bonded terminal alkenyl groups per molecule (Component (A)), trimethylsiloxane terminated (methylhydrosiloxane - dimethylsiloxane) copolymer (Component (B)), and a trimethylsiloxy terminated polydimethylsiloxane (Component (C)) which is the inert silicone-based component of the silicone matrix. Component (C) is present in a weight percent of at least about 20 wt.%, based on the total weight of the silicone matrix.

The flowability of the thermally conductive silicone composition may depend on the properties of polymeric components of the silicone matrix, e.g., their molecular weight or kinematic viscosity. For example, Component (A) may have a molecular weight that is below about 70,000 g/mole and a kinematic viscosity ranging from about 250 cSt to about 15,000 cSt at 25°C, and Component (C) may have a molecular weight ranging between about 5,000 g/mole and 50,000 g/mole and a kinematic viscosity ranging from about 50 cSt to about 10,000 cSt at 25°C.

Component (B) may comprise from about 15% to about 50% methylhydrosiloxane, wherein the number of silicon-bonded hydrogen atoms contained therein may be 0.1 to 0.5 per alkenyl group contained in Component (A).

The thermal conductivity of the thermally conductive silicone composition may be controlled by choosing the type and the relative amount of the heat transfer filler. The weight ratio between the heat transfer filler and the silicone matrix in the thermally conductive silicone composition according to the principles of the present invention is above 11:1. The heat transfer filler contains a ceramic powder having a thermal conductivity of at least about 10 W/mK. The ceramic powder comprises at least about 40 wt.% of aluminum oxide (Al₂O₃). Aluminum oxide powder may have an average particle size of less than about 100 µm.

### DETAILED DESCRIPTION OF THE INVENTION

Unless defined otherwise, all technical and scientific terms used herein have the same meaning as commonly understood by one of ordinary skill in the art to which this disclosure belongs.

Thermally conductive silicone compositions are widely used in microelectronics to assist in heat dissipation in electronic devices. For example, the composition may be applied to a certain electronic component vis-à-vis which temperature needs to be reduced during the device operation, or applied between such component and a heat sink. The composition may be in the form of a liquid, semi-liquid, or gel composition. Typically, the thermally conductive silicone compositions are curable, and may be cured prior to, or after, application of the composition onto the target electrical component. The composition may also be cured in a multi-step process, e.g., such that a first step is performed before application onto the electronic component and a second step is performed following such application. Curing affects the viscosity of the composition. For example, in its uncured state, the composition may be liquid, while in its cured state it may become a gel or a solid. The viscosity of the cured composition may be controlled, *inter alia,* by choosing specific silicone polymers and by adjusting the curing conditions. The desired state of the cured composition is selected based on its desired application. In instances where the thermally conductive silicone composition is configured to be applied as a paste (or a putty), i.e., being in a highly viscous state but not a solid one, it is particularly important that the composition has an essentially high flow rate, such that it may be conveniently applied to the target component, homogeneously covering the intended surface, while being stable and maintaining its shape until further curing. In applications where the thermally conductive silicone composition is added as a liquid or a gel and does not undergo additional curing, it is particularly important that the composition remains stable following its application without compromising its flowability. Additionally, high flow rate of the thermally conductive silicone composition may be advantageous in providing coatings with higher adhesion and longer service life.

The terms "cured" or "curing", as used herein, refer to a process by which the silicone polymer becomes crosslinked.

An additional requirement that the thermally conductive silicone composition may fulfill is high thermal conductivity. This is achieved by adding, to the silicone matrix, heat transfer filler materials such as metals and/or ceramics, including, *inter alia,* metal or metalloid oxides, metal or metalloid nitrides, metal or metalloid carbides, and combinations thereof. Factors affecting the thermal conductivity of the thermally conductive silicone composition in addition to the chemical nature of the heat transfer material may include, among others, morphological properties of the heat transfer material, such as, the mean particle size, particle size distribution, or surface area.

The thermally conductive silicone composition according to the various aspects and embodiments of the present invention comprises a silicone matrix and a heat transfer filler. The flowability and stability of the thermally conductive silicone composition mainly depends on the composition, properties, and relative amount of the silicone matrix, and the thermal conductivity mainly depends on the composition, properties, and relative amount of the heat transfer filler.

The term "silicone matrix", as used herein, refers to a composition comprising more than one polymeric silicone compound. The silicone matrix suitable for use in the thermally conductive silicone composition of the present invention comprises at least one silicone polymer. The term "silicone polymer", as used herein, refers to a polymer obtained from at least one monomer comprising at least one silicon atom. Non-limiting examples of silicone polymers include siloxane polymers and silane polymers. The term "siloxane polymer", as used herein, is meant to encompass a polymer comprised of a backbone of repeating silicon and oxygen atoms, and which comprises one or more of monofunctional, difunctional, trifunctional or tetrafunctional siloxy (R₃Si-O-) units.

In some embodiments, the silicone polymer has a molecular weight of at least about 200 g/mole. In further embodiments, the silicone polymer has a molecular weight of at least about 500 g/mole. In still further embodiments, the silicone polymer has a molecular weight of at least about 1,000 g/mole. In yet further embodiments, the silicone polymer has a molecular weight of at least about 5,000 g/mole. In still further embodiments, the silicone polymer has a molecular weight of at least about 10,000 g/mole.

When referring to the total weight of the silicone matrix, it is to be understood that it encompasses all the silicone-based materials of the thermally conductive silicone composition, as well as any additives known in the art, such as, *inter alia,* plasticizers, that may be added to the silicone matrix to fine tune its properties but that do not significantly affect the thermal conductivity of the thermally conductive silicone composition.

Preferably, at least one of the silicone polymers within the silicone matrix may undergo crosslinking, and at least one of the silicone polymers may act as a crosslinking agent. The terms "crosslinking" and "crosslinked", as used herein, are meant to encompass formation of covalent, electrostatic, hydrogen, and/or dynamic crosslinking bonds formed by the crosslinking agent between polymer chains of said at least one silicone polymer.

The crosslinking may affect viscosity and stability of the composition to provide the desired flowability of the final thermal paste product.

The crosslinking may proceed through an addition reaction between the silicone polymer that may undergo crosslinking and the silicone polymer that may act as a crosslinking agent. For example, the silicone polymer that may undergo crosslinking may be a vinyl-functional siloxane polymer, and the silicone polymer that may act as a crosslinking agent may be a hydride-functional siloxane polymer that, upon reaction therebetween, form a covalent ethyl bond.

The silicone polymer that may undergo crosslinking may be a polyorganosiloxane containing two silicon-bonded terminal alkenyl groups per molecule (Component (A)). The term "alkenyl", as used herein, refers to an aliphatic hydrocarbon group containing a carbon-carbon double bond, and includes straight-chain, branched-chain, and cyclic alkenyl groups. For example, the alkenyl group has 2-6 carbon atoms.

The terminal alkenyl group may be selected from a vinyl group, allyl group, 1-butenyl group, 1-hexenyl group, and a combination thereof. For example, the alkenyl group may be a vinyl group. In certain such embodiments, Component (A) comprises vinyl terminated polydimethylsiloxane, as depicted by Formula (1), 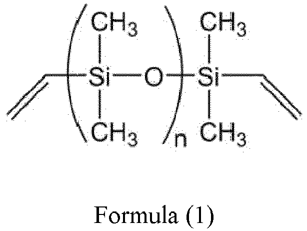 wherein n is an integer ranging between about 2 and 1,000.

Molecular weight and the kinematic viscosity of Component (A) may affect the flowability of the thermally conductive silicone composition, before and after the crosslinking takes place. The term "molecular weight", as used herein, refers to a weight average molecular weight as measured using the method described in: Kato, Takamatsu, Fukutomi, Fukuda, and Hashimoto "Estimation of molecular weight by gel permeation chromatography and viscometry ", Journal of Applied Polymer Science, volume 21 (1977), pages 577-579 (10. 1002/app. 1977.07021 0223). The terms "viscosity" and "kinematic viscosity" that may be used herein interchangeably, refer to the absolute viscosity of a liquid divided by its density, both values having been measured at 25°C, wherein the absolute viscosity may be measured according to ASTM D7042, and the density may be measured according to ASTM D4052.

Preferably, Component (A) has a molecular weight that is below about 70,000 g/mole. It has been established by the inventors that addition of a polyorganosiloxane containing two silicon-bonded terminal alkenyl groups per molecule which has a molecular weight above 70,000 g/mole, and, specifically of about 72,000 g/mole, results in an inferior thermally conductive silicone composition in terms of at least one of flow rate and thermal conductivity.

In some embodiments, the molecular weight of Component (A) is below about 60,000 g/mole. In further embodiments, the molecular weight of Component (A) is below about 50,000 g/mole. In yet further embodiments, the molecular weight of Component (A) is below about 40,000 g/mole. In still further embodiments, the molecular weight of Component (A) is below about 30,000 g/mole.

Component (A) may have a molecular weight that is above about 5,000 g/mole. In some embodiments, Component (A) has a molecular weight that is above about 10,000 g/mole. In further embodiments, Component (A) has a molecular weight that is above about 15,000 g/mole. In yet further embodiments, Component (A) has a molecular weight that is above about 20,000 g/mole. In still further embodiments, Component (A) has a molecular weight that is above about 25,000 g/mole.

Component (A) may have a molecular weight that ranges from about 5,000 g/mole to about 70,000 g/mole. In some embodiments, Component (A) has a molecular weight that ranges from about 10,000 g/mole to about 60,000 g/mole. In further embodiments, Component (A) has a molecular weight that ranges from about 15,000 g/mole to about 50,000 g/mole. In yet further embodiments, Component (A) has a molecular weight that ranges from about 20,000 g/mole to about 40,000 g/mole. In still further embodiments, Component (A) has a molecular weight that ranges from about 25,000 g/mole to about 3 5,000 g/mole. In certain embodiments, Component (A) has a molecular weight that is about 28,000 g/mole.

Preferably, Component (A) has a kinematic viscosity that ranges from about 250 cSt to about 15,000 cSt. Without wishing to being bound by theory or mechanism of action, it is assumed that the use of a polyorganosiloxane containing two silicon-bonded terminal alkenyl groups per molecule that has a kinematic viscosity below 15,000 cSt improves at least one of flow rate and thermal conductivity of the thermally conductive silicone composition as compared to the use of alkenyl-terminated polyorganosiloxane having a higher kinematic viscosity.

In some embodiments, Component (A) has a kinematic viscosity that ranges from about 250 cSt to about 10,000 cSt. In further embodiments, Component (A) has a kinematic viscosity that ranges from about 500 cSt to about 5,000 cSt. In yet further embodiments, Component (A) has a kinematic viscosity that ranges from about 750 cSt to about 2,000 cSt. In certain embodiments, Component (A) has a kinematic viscosity that is about 1,000 cSt.

Component (A) may contain a combination (i.e., more than one) of polyorganosiloxanes containing two silicon-bonded terminal alkenyl groups per molecule having different molecular weights and kinematic viscosities. In certain such embodiments, the molecular weights and the kinematic viscosities of each one of the polyorganosiloxanes containing two silicon-bonded terminal alkenyl groups per molecule may be as detailed hereinabove.

The silicone polymer that may act as a crosslinking agent may be a trimethylsiloxane terminated (methylhydrosiloxane - dimethylsiloxane) copolymer (Component (B)). The relative amount of the methylhydrosiloxane monomers within the polymer may determine the crosslinking density of Component (A) by Component (B). Component (B) may comprise from about 15% to about 50% methylhydrosiloxane. In some embodiments, Component (B) comprises from about 25% to about 35% methylhydrosiloxane.

The number of silicon-bonded hydrogen atoms contained in Component (B) may range from 0.1 to 0.5 per alkenyl group contained in Component (A). In some embodiments, the number of silicon-bonded hydrogen atoms contained in Component (B) may range from 0.2 to 0.4 per alkenyl group contained in Component (A). In further embodiments, the number of silicon-bonded hydrogen atoms contained in Component (B) may range from 0.2 to 0.3 per alkenyl group contained in Component (A). In certain embodiments, the number of silicon-bonded hydrogen atoms contained in Component (B) is about 0.3 per alkenyl group contained in Component (A).

In certain embodiments, Component (B) is a trimethylsiloxane terminated (methylhydrosiloxane - dimethylsiloxane) copolymer, as depicted by Formula (2), 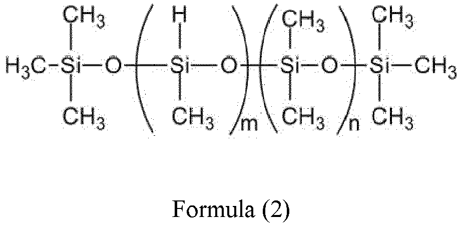 wherein m is an integer ranging between about 2 and 20, and n is an integer ranging between about 5 and 50.

Typically the molecular weight of the silicone polymer that may act as a crosslinking agent (e.g., Component (B) of the silicone matrix of the thermally conductive silicone composition of the present invention) has a lower molecular weight and/or a lower kinematic viscosity than the silicone polymer that may undergo crosslinking (e.g., Component (A) of the silicone matrix of the thermally conductive silicone composition of the present invention).

Component (B) may have a molecular weight that ranges from about 500 g/mole to about 5000 g/mole. In some embodiments, Component (B) has a molecular weight ranging from about 750 g/mole to about 4000 g/mole. In further embodiments, the molecular weight of Component (B) ranges from about 1000 g/mole to about 3000 g/mole. In certain embodiments, the molecular weight of Component (B) ranges from about 1900 g/mole to about 2000 g/mole.

Component (B) may have a kinematic viscosity ranging from about 5 to about 200 cSt. In some embodiments, the kinematic viscosity of Component (B) ranges from about 10 to about 100 cSt. In further embodiments, the kinematic viscosity of Component (B) ranges from about 20 to about 50 cSt. In certain embodiments, the kinematic viscosity of Component (B) ranges from about 25 to about 35 cSt.

Component (B) may contain a combination (i.e., more than one) of trimethylsiloxane terminated (methylhydrosiloxane - dimethylsiloxane) copolymers having different molecular weights and kinematic viscosities. In certain such embodiments, the molecular weights and the kinematic viscosities of each one of the trimethylsiloxane terminated (methylhydrosiloxane - dimethylsiloxane) copolymers may be as detailed hereinabove.

The relative amount of the silicone polymer that may undergo crosslinking (e.g., Component (A) of the silicone matrix of the thermally conductive silicone composition of the present invention) and of the silicone polymer that may act as a crosslinking agent (e.g., Component (B) of the silicone matrix of the thermally conductive silicone composition of the present invention) may affect the crosslinking density. Typically, Component (A) is present in a significantly higher amount (by weight) in the silicone matrix than Component (B).

Component (A) may be present in a weight percent ranging from about 30 wt.% to about 80 wt.%, based on the total weight of the silicone matrix. In some embodiments, Component (A) is present in a weight percent ranging from about 35 wt.% to about 70 wt.%, based on the total weight of the silicone matrix. In further embodiments, Component (A) is present in a weight percent ranging from about 40 wt.% to about 60 wt.%, based on the total weight of the silicone matrix. In yet further embodiments, Component (A) is present in a weight percent ranging from about 45 wt.% to about 55 wt.%, based on the total weight of the silicone matrix. In certain embodiments, Component (A) is present in a weight percent of about 48 wt.%, based on the total weight of the silicone matrix.

Component (B) may be present in a weight percent ranging from about 0.03 wt.% to about 2 wt.%, based on the total weight of the silicone matrix. In some embodiments, Component (B) is present in a weight percent ranging from about 0.05 wt.% to about 1.5 wt.%, based on the total weight of the silicone matrix. In further embodiments, Component (B) is present in a weight percent ranging from about 0.1 wt.% to about 1 wt.%, based on the total weight of the silicone matrix. In certain embodiments, Component (B) is present in a weight percent of about 0.25 wt.%, based on the total weight of the silicone matrix.

The weight ratio between Component (A) and Component (B) may range from about 500:1 to about 50:1. In some embodiments, the weight ratio between Component (A) and Component (B) ranges from about 300:1 to about 100:1. In certain embodiments, the weight ratio between Component (A) and Component (B) is about 200:1.

The crosslinking reaction between Component (A) and Component (B) may be initiated or catalyzed by a suitable catalyst. The silicone matrix may therefore comprise a catalyst for a hydrosilylation reaction between Component (A) and Component (B). Hydrosilylation reaction catalysts are typically selected from platinum group metals or metal alloys, or from platinum group metal-containing compounds. Non-limiting examples of the platinum group metals include platinum (including platinum black), rhodium and palladium. The metals may be unsupported or supported on a substrate, such as, but not limited to, alumina, silica, or carbon.

The platinum group metal-containing compounds may be selected from platinum group metal coordination complexes, platinum group metal salts such as platinum chloride, and platinum group metal acids such as chloroplatinic acid, wherein the acid may be unsubstituted or substituted, e.g., by alcohol, or be in the form of a coordination complex, e.g., with an olefin or a vinyl group-containing siloxane.

Non-limiting examples of the suitable platinum group metal coordination complexes include a rhodium-olefin complex and chlorotris(triphenylphosphine)rhodium (Wilkinson's catalyst). Non-limiting examples of suitable platinum group metal salts and acids include H₂PtCl₄, H₂PtCl₆, NaHPtCl₆, KHPtCl₆, Na₂PtCl₆, K₂PtCl₄, PtCl₄, PtCl₂, and NaHPtCl₄. A complex of the platinum group metal with a vinyl group-containing siloxane may be a platinum 1,3-diethenyl-1,1,3,3-tetramethyldisiloxane complex.

The hydrosilylation reaction catalyst may be present in the silicone matrix in very low concentrations. For example, the silicone matrix may contain from about 0.1 ppm to about 100 ppm of the platinum group metal. In some embodiments, the silicone matrix comprises from about 1 ppm to about 50 ppm of the platinum group metal. In certain embodiments, the silicone matrix comprises about 10 ppm of the platinum group metal. In additional embodiments, the silicone matrix comprises from about 100 ppm to about 300 ppm of the platinum 1,3-diethenyl-1,1,3,3-tetramethyldisiloxane complex.

The rate of the crosslinking of Component (A) by Component (B) may be further controlled by the addition of an inhibitor of the hydrosilylation reaction. In some embodiments, the thermally conductive silicone composition comprises an inhibitor of the hydrosilylation reaction. The inhibitor may be any material that inhibits the catalytic activity of the platinum group metal-based catalysts. The inhibitor may be selected from an unsaturated hydrocarbon monoester, unsaturated hydrocarbon diester, ethylenically or aromatically unsaturated amide, acetylenic compound, silylated acetylenic compound, ethylenically unsaturated isocyanate, olefinic siloxane, vinylcyclosiloxane, fumarate/alcohol mixture, conjugated ene-yne, diaziridine, ethynyl cyclohexanol, and any combination thereof. Non-limiting examples of suitable inhibitors include 1-ethynyl-1-cyclohexanol, 2-methyl-3-butyn-2-ol, 2-phenyl-3-butyn-2-ol, 2-ethynyl-isopropanol, 2-ethynyl-butane-2-ol, 3,5-dimethyl-1-hexyn-3-ol, trimethyl (3,5-dimethyl-1-hexyn-3-oxy)silane, dimethyl-bis-(3-methyl-1-butyn-oxy)silane, methylvinylbis(3-methyl-1-butyn-3-oxy)silane, ((1,1-dimethyl-2-propynyl)oxy)trimethylsilane, dimethyl maleate, diallyl maleate, diethyl fumarate, diallyl fumarate, bis-2-methoxy-1-methylethylmaleate, mono-octylmaleate, mono-isooctylmaleate, mono-allyl maleate, mono-methyl maleate, mono-ethyl fumarate, mono-allyl fumarate, 2-methoxy-1-methylethylmaleate, 2-isobutyl-1-butene-3-yne, 3,5-dimethyl-3-hexene-1-yne, 3-methyl-3-pentene-1-yne, 3-methyl-3-hexene-1-yne, 1-ethynylcyclohexene, 3-ethyl-3-butene-1-yne, 3-phenyl-3-butene-1-yne, and 1,3,5,7-tetramethyl-1,3,5,7-tetravinylcyclotetrasiloxane. For example, the inhibitor may be selected from dimethyl maleate, diallyl maleate, bis-2-methoxy-1-methylethylmaleate, 1-ethynyl-1-cyclohexanol, and 3,5-dimethyl-1-hexyn-3-ol. In certain embodiments, the inhibitor comprises dimethyl maleate.

If used, the inhibitor may be present in the silicone matrix in an amount ranging from about 0.5 ppm to about 500 ppm. In some embodiments, the inhibitor is present in an amount ranging from about 1 ppm to about 300 ppm, based on the total weight of the silicone matrix. In further embodiments, the inhibitor is present in an amount ranging from about 5 ppm to about 100 ppm, based on the total weight of the silicone matrix.

The inhibitor may be present in the same molar concentration as the catalyst. Alternatively, the molar concentration of the inhibitor within the silicone matrix may be higher than that of the catalyst. For example, the molar ratio between the inhibitor and the catalyst may range from about 0.25: 1 to about 20:1. In some embodiments, the molar ratio between the inhibitor and the catalyst ranges from about 1:1 to about 10:1.

At least one of the silicone polymers within the silicone matrix according to the principles of the present invention, is an inert silicone polymer. The term "inert silicone polymer", as used herein, refers to a silicone polymer that does not participate in the crosslinking reaction between Component (A) and Component (B), in any other crosslinking reaction or a curing process. The inert silicone polymer may be a trimethylsiloxy terminated polydimethylsiloxane (Component (C)).

Without wishing to being bound by theory or mechanism of action, it is contemplated that, while the relative amounts of Component (A) and Component (B) within the thermally conductive silicone composition are mutually dependent, and may not be altered to obtain the desired flow rate of the crosslinked composition, without affecting the crosslinking degree or efficiency, Component (C) may be added to the silicone matrix in the desired amount to control the viscosity of the thermally conductive composition. It has been surprisingly found by the inventors, that incorporation of a relatively high content of the inert silicone polymer (e.g., Component (C) of the silicone matrix of the thermally conductive silicone composition of the present invention) allows attainment of the desired flow rate without compromising the thermal conductivity properties of the thermally conductive silicone composition. For example, incorporation of at least about 20 wt%. of Component (C) within the silicone matrix of the thermally conductive silicone composition may allow the introduction of at least 11 parts per weight of the heat transfer filler per 1 part per weight of the silicone matrix, thereby obtaining a particularly high thermal conductivity of the thermally conductive silicone composition, which may provide efficient heat dissipation in the electronic device of choice.

Preferably, Component (C) has a molecular weight ranging from about 5,000 g/mole to about 50,000 g/mole. The specified molecular weight of the trimethylsiloxy terminated polydimethylsiloxane, among other factors, such as kinematic viscosity and the relative amount thereof within the silicon matrix, may provide the desired flow rate of the thermally conductive silicone composition. In some embodiments, the molecular weight of Component (C) ranges from about 10,000 to about 20,000 g/mole. In further embodiments, the molecular weight of Component (C) ranges from about 12,000 g/mole to about 15,000 g/mole. In certain embodiments, the molecular weight of Component (C) is about 13,650 g/mole.

The kinematic viscosity of Component (C) may range from about 50 cSt to about 10,000 cSt. Preferably, the kinematic viscosity of Component (C) ranges from about 50 cSt to about 1,000 cSt. In some embodiments, the kinematic viscosity of Component (C) ranges from about 100 cSt to about 750 cSt. In further embodiments, the kinematic viscosity of Component (C) ranges from about 200 cSt to about 500 cSt. In certain embodiments, the kinematic viscosity of Component (C) is about 350 cSt.

In some embodiments, Component (C) is trimethylsiloxy terminated polydimethylsiloxane, as depicted by Formula (3), 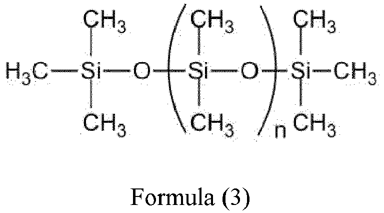 wherein n is an integer ranging between about 50 and about 500.

Component (C) is present in the silicone matrix in a weight percent of at least about 20 wt.%, based on the total weight of the silicone matrix. Component (C) may be present in a weight percent of at least about 25 wt.%, based on the total weight of the silicone matrix. In some embodiments, Component (C) is present in a weight percent of at least about 30 wt.%, based on the total weight of the silicone matrix. In further embodiments, Component (C) is present in a weight percent of at least about 35 wt.%, based on the total weight of the silicone matrix. In still further embodiments, Component (C) is present in a weight percent of at least about 40 wt.%, based on the total weight of the silicone matrix. In yet further embodiments, Component (C) is present in a weight percent of at least about 45 wt.%, based on the total weight of the silicone matrix.

Component (C) may be present in a weight percent ranging from about 20 wt.% to about 70 wt.%, based on the total weight of the silicone matrix. In some embodiments, Component (C) is present in a weight percent ranging from about 25 wt.% to about 65 wt.%, based on the total weight of the silicone matrix. In further embodiments, Component (C) is present in a weight percent ranging from about 30 wt.% to about 60 wt.%, based on the total weight of the silicone matrix. In further embodiments, Component (C) is present in a weight percent ranging from about 35 wt.% to about 65 wt.%, based on the total weight of the silicone matrix. In still further embodiments, Component (C) is present in a weight percent ranging from about 40 wt.% to about 60 wt.%, based on the total weight of the silicone matrix. In yet further embodiments, Component (C) is present in a weight percent ranging from about 45 wt.% to about 55 wt.%, based on the total weight of the silicone matrix. In certain embodiments, Component (C) is present in a weight percent of about 50 wt.%, based on the total weight of the silicone matrix.

Component (C) may contain a combination (i.e., more than one) of trimethylsiloxy terminated polydimethylsiloxanes having different molecular weights and kinematic viscosities, as long as the weight percent of the total composition of trimethylsiloxy terminated polydimethylsiloxanes within the silicone matrix is at least about 20 wt.% In certain such embodiments, the molecular weights and the kinematic viscosities of each one of the trimethylsiloxy terminated polydimethylsiloxanes may be as detailed hereinabove.

In various examples, as detailed hereinbelow, Component (A) and Component (C) are the two major components of the silicone matrix in terms of relative amounts of silicone matrix components. In such instances, the weight ratio between Component (A) and Component (C) may affect the flow rate of the thermally conductive silicone composition. The weight ratio between Component (A) and Component (C) may range from about 1:2 to about 2:1. In some embodiments, the weight ratio between Component (A) and Component (C) ranges from about 1:1.75 to about 1.75:1. In further embodiments, the weight ratio between Component (A) and Component (C) ranges from about 1:1.5 to about 1.5:1. In yet further embodiments, the weight ratio between Component (A) and Component (C) ranges from about 1:1.25 to about 1.25:1. In certain embodiments, the weight ratio between Component (A) and Component (C) is about 1:1.

The main component of the thermally conductive silicone composition that imparts thermal conductivity thereto is a heat transfer filler. In addition to having high thermal conductivity, the heat transfer filler may preferably allow good storage stability of the thermally conductive silicone composition prior to curing (e.g., a stable dispersion of the filler within the silicone matrix without sedimentation of the filler). For example, the use of a thermal transfer filler having essentially large particles may result in an unstable or inhomogeneous composition that requires redispersion prior to curing. Furthermore, introduction of the heat transfer filler into silicone-based compositions in a large amount may impair adhesion of the cured composition to substrates, such as metals and semiconductors. Without wishing to being bound by theory or mechanism of action, it is contemplated that the combination of the specific silicone matrix composition and the choice of the suitable heat transfer filler provide the thermally conductive silicone compositions of the present invention that are characterized by long shelf life and excellent adhesion of the cured product, in addition to the desired flowability and thermal conductivity.

The heat transfer filler of the thermally conductive silicone composition according to the aspects and embodiments of the present invention comprises a ceramic powder having a thermal conductivity of at least about 10 W/mK. The heat transfer filler may contain a combination (i.e., more than one) ceramic powders, wherein each powder has a thermal conductivity of at least about 10 W/mK. In some embodiments, the heat transfer filler comprises a ceramic powder having a thermal conductivity of at least about 20 W/mK. In further embodiments, the heat transfer filler comprises a ceramic powder having a thermal conductivity of at least about 30 W/mK.

When referring to the total weight of the heat transfer filler, it is to be understood that it encompasses all the ceramic materials and/or particulate materials of the thermally conductive silicone composition dispersed within the silicone matrix.

The term "ceramic", as used herein, refers to any material composed of a metallic or metalloid element combined with any one of oxygen, carbon, nitrogen, or sulfur. Non-limiting examples of suitable ceramic powders include aluminum oxide (Al₂O₃), aluminum nitride (AlN), zinc oxide (ZnO), magnesium oxide (MgO), beryllium oxide (BeO), chromium oxide (Cr₂O₃), titanium oxide (TiO₂), boron nitride (BN), boron carbide (B₄C), titanium carbide (TiC), silicon nitride (Si₃N₄), and silicon carbide (SiC).

Particles of the ceramic powder material may have any shape as known in the art, such as, but not limited to, spherical, substantially spherical, polyhedral, ellipsoidal, plate, needle, rod, wire, ribbon, pillar shape, or irregular or amorphous shape. The term "spherical" is meant to encompass not only spherical particles, but also amorphous particles with rounded edges.

The ceramic powder may have particle sizes in the micron- or nano-size range, ranging, for example, from several tens of nanometers to several hundreds of micrometers, such as from about 20 nm to about 500 µm. In some embodiments, the average particle size of the ceramic powder ranges from about 100 nm to about 250 µm. In further embodiments, the average particle size of the ceramic powder ranges from about 500 nm to about 100 µm. In still further embodiments, the average particle size of the ceramic powder ranges from about 1 µm to about 50 µm.

The term "particle size", as used herein may refer to a particle diameter when the particle has a spherical shape. When the particle has a non-spherical shape, such as, for example, a rod shape or an elliptical shape, the term "particle size" may refer to the length of the particle in its largest dimension. The ratio between the length of the non-spherical particle in its largest dimension and in its smallest dimension may range from about 1:1 to about 1:50, such as, for example, from about 1:2 to about 1:25, or from about 1:5 to about 1:20. Alternatively, the term "particle size", when referring to a non-spherical particle, may refer to the diameter of an equivalent sphere that has the same volume as the non-spherical particle.

The term "average particle size", as used herein, may refer to an average particle size defined by a median diameter. The terms "median diameter" or "D50" that may be used interchangeably, refer to a particle diameter corresponding to 50% of the particles in a distribution curve in which particles are accumulated in the order of particle diameter from the smallest particle to the largest particle and wherein the particle size distribution is obtained on the volume basis and the total number of accumulated particles is 100%.

The average particle size may be measured by methods known to one of ordinary skill in the art. For example, the average particle size may be measured with a particle size analyzer, e.g., by using a laser diffraction method or dynamic light scattering, or an image analysis method, e.g., by using a transmission electron microscope (TEM) or a scanning electron microscope (SEM) image. As an example of other measuring methods, the average particle size may be measured using a centrifugal particle analyzer or estimated from a BET surface area analyzer.

Non-limiting examples of systems suitable for measuring the average particle size by laser diffraction of particles include a Fritsch ANALYSETTE 22 NeXT Nano, a Fritsch ANALYSETTE 22 NeXT Micro, a Beckman Coulter LS 13 320 XR Particle Size Analyzer, a Malvern Panalytical Mastersizer 3000, a Malvern Panalytical Zetasizer Pro, a Malvern Panalytical NanoSight NS300, a HORIBA Partica LA-960V2, a Microtrac S3500, a Microtrac BLUEWAVE, a Sympatec HELOS, or the like. For example, ISO 13320:2020 describes the requirements for laser diffraction methods, as well as instrument qualification and size distribution measurement standards. Laser diffraction methods may determine the particle size distribution of spherical particles, and the spherical equivalent size distributions for non-spherical particles. A report from one of the above-mentioned laser diffraction analyzers may produce a frequency versus size distribution of particles which, when fitted with a curve, may determine the accumulate percentage versus size curve. The measurements or the fitted curve may determine, e.g., the 10^{th} percentile size (the inclusive size limit of the 10% smallest particles, D10), the 50^{th} percentile size (D50, median), and the 90^{th} percentile, D90. The particle size distribution depends on the basis of the distribution calculation, including, *inter alia,* number, surface, and volume basis. Unless stated otherwise, the term "D50" refers to the distribution by volume.

When non-spherical particle distributions are characterized, an image analysis method may be used to determine distributions of particle size and particle shape. For example, two-dimensional (2D) image analysis of particles may be performed using a Malvern Panalytical NanoSight NS300, a Fritsch ANALYSETTE 28 ImageSizer, a Microtrac SYNC, a Sympatec QIPIC, a Sympatec PICTOS, a HORIBA PSA300, or the like. For example, three-dimensional (3D) image analysis of particles may be performed with an electron tomography device. For example, a device for image analysis of particles may comply with "ISO 13322-1:2014 Particle size analysis - Image analysis methods - Part 1: Static image analysis methods" or "ISO 13322-2:2006 Particle size analysis - Image analysis methods - Part 2: Dynamic image analysis methods", depending on the analysis method used.

In some embodiments, D90 of the ceramic particles is less than about 500 µm. The ceramic powder may have D90 below about 400 µm, below about 300 µm, below about 200 µm, or below about 100 µm.

The ceramic powder may be monodispersed or polydispersed, i.e., having a multimodal particle size distribution, such as, *inter alia,* a bimodal, trimodal, or quadmodal particle size distribution. In some embodiments, the ceramic powder is polydisperse. In certain such embodiments, the term "average particle size" refers to the median particle size of one of the groups of particles, preferably, the group having the highest volume density of the particles, unless stated otherwise. The polydispersed ceramic powder may be composed of the same ceramic particles having different groups of average particle sizes and/or of different types of ceramic powders (e.g., two or more different ceramic powders).

The ceramic powder comprises at least about 40 wt.% of aluminum oxide. In some embodiments, aluminum oxide is present in the heat transfer filler in a weight percent of at least about 50 wt.%, based on the total weight of the heat transfer filler. In further embodiments, aluminum oxide is present in the heat transfer filler in a weight percent of at least about 60 wt.%, based on the total weight of the heat transfer filler. In still further embodiments, aluminum oxide is present in the heat transfer filler in a weight percent of at least about 70 wt.%, based on the total weight of the heat transfer filler. In yet further embodiments, aluminum oxide is present in the heat transfer filler in a weight percent of at least about 80 wt.%, based on the total weight of the heat transfer filler. In still further embodiments, aluminum oxide is present in the heat transfer filler in a weight percent of at least about 85 wt.%, based on the total weight of the heat transfer filler. In yet further embodiments, aluminum oxide is present in the heat transfer filler in a weight percent of at least about 90 wt.%, based on the total weight of the heat transfer filler. In still further embodiments, aluminum oxide is present in the heat transfer filler in a weight percent of at least about 95 wt.%, based on the total weight of the heat transfer filler. In certain embodiments, the heat transfer filler consists essentially of aluminum oxide.

The aluminum oxide powder may have an average particle size of less than about 100 µm. Without wishing to being bound by theory or mechanism of action, it is contemplated that lower particle size of the ceramic powder allows to increase stability of the thermally conductive silicone composition and improve its processability. In some embodiments, the aluminum oxide powder has an average particle size of less than about 80 µm. In further embodiments, the aluminum oxide powder has an average particle size of less than about 70 µm. In yet further embodiments, the aluminum oxide powder has an average particle size of less than about 60 µm. In still further embodiments, the aluminum oxide powder has an average particle size of less than about 50 µm. In yet further embodiments, the aluminum oxide powder has an average particle size of less than about 40 µm. In still further embodiments, the aluminum oxide powder has an average particle size of less than about 30 µm. In yet further embodiments, the aluminum oxide powder has an average particle size of less than about 20 µm. In still further embodiments, the aluminum oxide powder has an average particle size of less than about 10 µm.

In some embodiments, the aluminum oxide powder has an average particle size ranging from about 1 µm to about 100 µm. In further embodiments, the aluminum oxide powder has an average particle size ranging from about 10 µm to about 80 µm. In still further embodiments, the aluminum oxide powder has an average particle size ranging from about 20 µm to about 70 µm. In yet further embodiments, the aluminum oxide powder has an average particle size ranging from about 30 µm to about 60 µm. In additional embodiments, the aluminum oxide powder has an average particle size ranging from about 1 µm to about 30 µm. In further embodiments, the aluminum oxide powder has an average particle size ranging from about 1 µm to about 20 µm. In still further embodiments, the aluminum oxide powder has an average particle size ranging from about 1 µm to about 10 µm.

Aluminum oxide may have a multimodal particle size distribution. For example, aluminum oxide may have at least a first average particle size ranging from about 1 µm to about 10 µm and a second average particle size ranging from about 10 µm to about 80 µm. In some embodiments, the first average particle size ranges from about 1 µm to about 20 µm and the second average particle size ranges from about 20 µm to about 80 µm. In additional embodiments, the first average particle size ranges from about 1 µm to about 10 µm and the second average particle size ranges from about 20 µm to about 80 µm. In further embodiments, the second average particle size ranges from about 40 µm to about 70 µm.

Preferably, aluminum oxide has particles of an essentially spherical shape.

Non-limiting examples of aluminum oxide powders that may be used in the thermally conductive silicone compositions of the present invention include SA-T-15 (SinoEnergy), SA-T-2 (SinoEnergy), Alumina AO-509 (Admatechs), SA-T-40DH2 (SinoEnergy), SA-T-70C1 (SinoEnergy), and any combination thereof.

The ceramic powder may further comprise zinc oxide. Zinc oxide may be present in the heat transfer filler in a weight percent of less than about 50 wt.%, based on the total weight of the heat transfer filler. In some embodiments, zinc oxide is present in the heat transfer filler in a weight percent of less than about 40 wt.% In further embodiments, zinc oxide is present in the heat transfer filler in a weight percent of less than about 30 wt.% In yet further embodiments, zinc oxide is present in the heat transfer filler in a weight percent of less than about 20 wt.%. In still further embodiments, zinc oxide is present in the heat transfer filler in a weight percent of less than about 15 wt.%, based on the total weight of the heat transfer filler.

The average particle size of zinc oxide may be smaller than the average particle size of aluminum oxide. For example, the ratio between the average particle size of aluminum oxide and zinc oxide may range from about 200:1 to about 10:1. In some embodiments, the ratio between the average particle size of aluminum oxide and zinc oxide ranges from about 100: 1 to about 50:1.

The zinc oxide powder may have an average particle size of less than about 1 µm. In some embodiments, the zinc oxide powder has an average particle size of less than about 0.8 µm. In further embodiments, the zinc oxide powder has an average particle size of less than about 0.5 µm. In still embodiments, the zinc oxide powder has an average particle size of less than about 0.3 µm. In yet further embodiments, the zinc oxide powder has an average particle size of less than about 0.2 µm.

The zinc oxide powder may have an average particle size ranging from about 0.01 µm to about 1 µm. In some embodiments, the zinc oxide powder has an average particle size ranging from about 0.03 µm to about 0.8 µm. In further embodiments, the zinc oxide powder has an average particle size ranging from about 0.05 µm to about 0.5 µm. In still embodiments, the zinc oxide powder has an average particle size ranging from about 0.08 µm to about 0.3 µm. In yet further embodiments, the zinc oxide powder has an average particle size ranging from about 0.1 µm to about 0.2 µm.

The zinc oxide particles may have an essentially amorphous or irregular shape.

The heat transfer filler may further comprise one or more of aluminum nitride, magnesium oxide, beryllium oxide, chromium oxide, titanium oxide, boron nitride, boron carbide, titanium carbide, silicon nitride, and silicon carbide.

As explained hereinabove, the thermally conductive silicone composition of the present invention allows incorporation of high concentrations of the heat transfer filler, such that the weight ratio between the heat transfer filler and the silicone matrix is above 11:1. The weight ratio between the heat transfer filler and the silicone matrix may be above 12:1. In some embodiments, the weight ratio between the heat transfer filler and the silicone matrix is above 13: 1. In further embodiments, the weight ratio between the heat transfer filler and the silicone matrix is above 14:1. In still further embodiments, the weight ratio between the heat transfer filler and the silicone matrix is 15:1 or higher. For example, the weight ratio between the heat transfer filler and the silicone matrix may be between about 15:1 and 16:1. In certain embodiments, the weight ratio between the heat transfer filler and the silicone matrix is about 15:1. In additional embodiments, the weight ratio between the heat transfer filler and the silicone matrix is about 16:1.

The ceramic powder may be treated by an organo-silane. Without wishing to being bound by theory or mechanism of action, it is contemplated that the organo-silane coating may improve the heat transfer filler dispersion uniformity and stability within the silicone matrix. The organo-silane may be selected from a trialkoxy silane, a tetraalkoxy silane or a partial hydrolysis-condensation product of the tetraalkoxy silane. Non-limiting examples of suitable organo-silanes include n-octyltriethoxysilane, n-octyltrimethoxysilane, tetraethoxysilane hexatrimethoxysilane, and allyltrimethoxysilane.

The organo-silane may be present in a weight percent ranging from about 0.2 wt.% to about 2 wt.% of the total weight of the heat transfer filler. In some embodiments, the organo-silane is present in a weight percent ranging from about 0.5 wt.% to about 1.5 wt.% of the total weight of the heat transfer filler.

The thermally conductive silicone composition of the present invention may further include additives as known in the art. These additives may include, for example, a reinforcing inorganic filler such as fumed silica, and a non-reinforcing filler such as calcium silicate and ferric oxide, an adhesion promotion agent such as an epoxy group-containing polysiloxane compound and/or an ester siloxane compound, a flame retarding agent, and a dyeing agent. The additives may be added as optional components in an amount not impairing the thermal conductivity and mechanical properties of the thermally conductive silicone composition of the present invention. Advantageously, the thermally conductive silicone composition of the present invention may not require the addition of a plasticizer.

In certain embodiments, the silicone matrix of the thermally conductive silicone composition comprises Component (A) that is the vinyl terminated polydimethylsiloxane having a molecular weight of about 28,000 g/mole and a kinematic viscosity of about 1,000 cSt; Component (B) that is the trimethylsiloxane terminated (methylhydrosiloxane - dimethylsiloxane) copolymer comprising from about 25% to about 35% methylhydrosiloxane, wherein the number of silicon-bonded hydrogen atoms contained therein is about 0.3 per alkenyl group contained in Component (A), and having a molecular weight ranging from about 1900 g/mole to about 2000 g/mole, and a kinematic viscosity ranging from about 25 to about 35 cSt; Component (C) that is the trimethylsiloxy terminated polydimethylsiloxane having a molecular weight ranging from about 12,000 g/mole to about 15,000 g/mole and a kinematic viscosity of about 350, being present in a weight percent of about 45-55 wt.%, based on the total weight of the silicone matrix. In further embodiments, Component (A) is present in a weight percent of about 45-55 wt.%, based on the total weight of the silicone matrix. The thermally conductive silicone composition may further comprise platinum 1,3-diethenyl-1,1,3,3-tetramethyldisiloxane complex.

In some related embodiments, the heat transfer filler comprises at least about 70 wt.% of aluminum oxide having an average particle size ranging from about 20 µm to about 80 µm. In additional related embodiments, the heat transfer filler comprises at least about 70 wt.% of aluminum oxide having an average particle size ranging from about 1 µm to about 20 µm. In certain related embodiments, the heat transfer filler comprises at least about 70 wt.% of aluminum oxide having a multimodal particle size distribution comprising a first average particle size ranging from about 1 µm to about 20 µm and a second average particle size ranging from about 20 µm to about 80 µm.

The thermally conductive silicone composition of the present invention is curable, wherein Component (A) may be at least partially crosslinked by Component (B). The term "thermally conductive silicone composition" may refer to the composition prior to, or following, curing. The composition following curing is also termed herein "cured composition", "crosslinked composition" or "thermal paste".

The term "at least partially crosslinked", as used herein, refers in some embodiments, to a crosslinking degree of at least about 10%. In further embodiments, the term "at least partially crosslinked" refers to a crosslinking degree of at least about 20%, at least about 30%, at least about 40%, at least about 50%, at least about 60%, at least about 70%, at least about 80%, or at least about 90%. The tern "crosslinking degree", as used herein, refers to the percentage of polymeric chains of Component (A) that are interconnected by Component (B) out of the total number of the polymeric chains of Component (A) present within the thermally conductive silicone composition. The degree of crosslinking of Component (A) by Component (B) may be evaluated, for example, by gel permeation chromatography (GPC). The thermally conductive silicone composition may be obtained by mixing the silicone matrix and the heat transfer filler. The components of the silicone matrix and of the heat transfer filler may be mixed in multiple steps, in different portions and in various combinations.

For example, Component (A) may be mixed with Component (B), Component (C), and, optionally, with the inhibitor, and the heat transfer filler and then the obtained mixture may be mixed with the catalyst. The final mixture is then cured. The heat transfer filler may be added in multiple portions, wherein each addition is followed by mixing.

In another embodiment, Component (A) is mixed with Component (B), Component (C), and, optionally, with the inhibitor, and then the obtained mixture is mixed with the catalyst and cured. The heat transfer filler is then added to the cured mixture. The heat transfer filler may be added in multiple portions, wherein each addition is followed by mixing.

In yet another embodiment, a first portion of Component (A) is mixed with Component (B), Component (C), and optionally, with the inhibitor, and the heat transfer filler and then the obtained mixture is mixed with the catalyst that is dispersed or dissolved in a second portion of Component (A). The final mixture is then cured. The heat transfer filler may be added in multiple portions, wherein each addition is followed by mixing.

In still another embodiment, a first portion of Component (A) is mixed with Component (B), Component (C), and optionally, with the inhibitor, and then the obtained mixture is mixed with the catalyst that is dispersed or dissolved in a second portion of Component (A). The obtained mixture is cured. The heat transfer filler is then added to the cured mixture. The heat transfer filler may be added in multiple portions, wherein each addition is followed by mixing.

The mixing may be performed in any mixer such as a planetary mixer or a kneader. The mixing may be performed at a temperature ranging from about 10°C to about 100°C. In some embodiments, the mixing is performed at a temperature ranging from about 10°C to about 80°C. In further embodiments, the mixing is performed at a temperature ranging from about 10°C to about 50°C. In still further embodiments, the mixing is performed at a temperature ranging from about 15°C to about 30°C. In certain embodiments, the mixing is performed at room temperature, e.g., at about 25°C.

The mixing may be performed at ambient pressure. Alternatively, the mixing may be performed at a pressure ranging from about 10 kPa to about 50 kPa. For example, the mixing may be performed at a pressure ranging from about 20 kPa to about 40 kPa.

The mixing of the components of the silicone matrix, with or without the heat transfer filler, prior to the addition of the catalyst may be performed for about 0.5 minutes to about 1 hour. In some embodiments, the mixing is performed for about 0.5 minutes to about 10 minutes.

The mixing of the components of the silicone matrix, with or without the heat transfer filler, after the addition of the catalyst may be performed for about 0.5 minutes to about 1 hour. In some embodiments, the mixing is performed for about 0.5 minutes to about 10 minutes.

The mixing of the components of the silicone matrix with the heat transfer filler prior to the addition of the catalyst may be performed by changing the mixing rate and/or under varying pressure. For example, the mixing may be performed by decreasing the mixing rate from about 2000 rpm to about 1000 rpm. The mixing may be continued by increasing the mixing rate to about 2000 rpm and decreasing it again to 1000 rpm. Additionally, or alternatively, the mixing may be initiated under atmospheric pressure and then the pressure may be raised to about 30 kPa, while the composition is being mixed. The pressure may then be decreased to atmospheric pressure and the mixing may continue.

The mixing of the components of the silicone matrix following the addition of the catalyst may also be performed by changing the mixing rate. For example, the mixing may be performed by decreasing the mixing rate from about 2000 rpm to about 1500 rpm. The mixing rate may then be raised to about 2000 rpm and then lowered again to about 1500 rpm.

Following the addition of the catalyst and mixing, the resultant mixture is cured. During curing, the mixture may be left unagitated. Curing may continue for up to about 72 hours, such as, from about 1 hour to about 72 hours, from about 5 hours to about 48 hours, or from about 10 hours to about 24 hours.

Curing may be performed at a temperature ranging from about 10°C to about 100°C. In some embodiments, curing is performed at a temperature ranging from about 10°C to about 80°C. In further embodiments, curing is performed at a temperature ranging from about 10°C to about 50°C. In still further embodiments, curing is performed at a temperature ranging from about 15°C to about 30°C. In certain embodiments, curing is performed at room temperature, e.g., at about 25°C.

The cured thermally conductive silicone composition may be in any form suitable for use in an electronic device or component, in particular for filling the gaps between two electronic components, such as in the form of a thermal paste, putty, gel, or adhesive. The cured thermally conductive silicone composition may be mixed prior to application to the electronic device or component. The composition may be applied by any technique as known in the art, e.g., by dispensing, brushing or spreading. Pressure may be applied to the electronic device or component following application of the cured thermally conductive silicone composition in order to facilitate distribution of the composition thereupon.

The cured thermally conductive silicone composition according to the principles of the present invention being, for example, in a form of a thermal paste, may have a particularly high thermal conductivity and flow rate. For example, the thermal conductivity of the cured thermally conductive silicone composition may be at least about 2.5 W/mK. Preferably, the thermal conductivity of the cured thermally conductive silicone composition is at least about 3.0 W/mK. In some embodiments, the thermal conductivity is at least about 3.5 W/mK. In further embodiments, the thermal conductivity is at least about 3.7 W/mK. In yet further embodiments, the thermal conductivity is at least about 3.8 W/mK.

In some embodiments, the thermal conductivity of the cured thermally conductive silicone composition ranges from about 2.5 W/mK to about 4.5 W/mK. In further embodiments, the thermal conductivity of the cured thermally conductive silicone composition ranges from about 3.0 W/mK to about 4.0 W/mK. In certain embodiments, the thermal conductivity of the cured thermally conductive silicone composition ranges from about 3.5 W/mK to about 4.0 W/mK.

The flow rate of the cured thermally conductive silicone composition may be at least about 30 g/min. In some embodiments, the flow rate of the cured thermally conductive silicone composition is at least about 40 g/min. In further embodiments, the flow rate is at least about 50 g/min. In still further embodiments, the flow rate is at least about 60 g/min. In yet embodiments, the flow rate is at least about 70 g/min. In still further embodiments, the flow rate is at least about 80 g/min. In yet further embodiments, the flow rate is at least about 90 g/min. In still further embodiments, the flowrate is at least about 100 g/min. In yet further embodiments, the flow rate is at least about 120 g/min.

In some embodiments, the flow rate of the cured thermally conductive silicone composition ranges from about 50 g/min to about 200 g/min. In further embodiments, the flow rate of the cured thermally conductive silicone composition ranges from about 60 g/min to about 150 g/min.

In certain embodiments, the thermal conductivity of the cured thermally conductive silicone composition is at least about 3.9 W/mK and the flow rate is at least about 50 g/min. In additional embodiments, the thermal conductivity of the cured thermally conductive silicone composition is at least about 3.8 W/mK and the flow rate is at least about 140 g/min. In further embodiments, the thermal conductivity of the cured thermally conductive silicone composition is at least about 3.7 W/mK and the flow rate is at least about 80 g/min.

The thermal conductivity of the cured thermally conductive silicone composition may be measured, e.g., by HotDisk ISO 22007-2. The flow rate of the cured thermally conductive silicone composition may be measured, e.g., by the Standard Test Method for Melt Flow Rates of Thermoplastics by Extrusion Plastometer (ASTM D1238), or any variation thereof.

Further provided is an electronic device comprising the cured thermally conductive silicone composition or the thermal paste as described hereinabove. For example, the electronic device may be for use in a renewable energy generation and/or energy storage system, such as, for example, a rechargeable batteries stack or a photovoltaic cell system. The cured thermally conductive silicone composition may be applied to a heat generating electronic component that requires cooling, such as a photovoltaic cell, battery packaging, power optimizer, voltage inverter, CPU, and field effect transistor. Additionally, or alternatively, the cured thermally conductive silicone composition may be applied to a heat dissipating body, such as a heatsink or a heat spreader. Preferably, the cured thermally conductive silicone composition is disposed between the heat generating electronic component and the heat dissipating electronic component.

The thickness of the cured thermally conductive silicone composition applied to the one or more of the heat generating electronic component and the heat dissipating electronic component may range from about 0.03 mm to about 1 mm.

The thermally conductive silicone composition for applying to electronic components or devices may be provided in a cured state or uncured state, in one container or in separate containers. The composition that is provided in its uncured state may be disposed in a two-container or a three-container kit, wherein at least one of Component (A) and Component (B) are separated from the catalyst. The heat transfer filler may also be disposed in a separate container. The multiple container kit requires mixing of the contents of the containers prior to use. Preferably, the thermally conductive silicone composition is provided in its cured state in a single container and is ready for use (i.e., does not require mixing of the component and curing).

As used herein and in the appended claims the singular forms "a", "an", and "the" include plural references, unless the content clearly dictates otherwise. Thus, for example, reference to "a heat transfer filler" includes a plurality of such heat transfer fillers and equivalents thereof known to those skilled in the art, and so forth. It is to be noted that the term "and" or the term "or" is generally employed in its sense including "and/or", unless the content clearly dictates otherwise.

As used herein, the term "about", when referring to a measurable value such as an amount, a temporal duration, and the like, is meant to encompass variations of +/-10%, more preferably +/-5%, even more preferably +/-1%, and still more preferably +/-0.1% from the specified value.

The following examples are presented in order to more fully illustrate some embodiments of the invention. They should, in no way be construed, however, as limiting the broad scope of the invention. One skilled in the art may readily devise many variations and modifications of the principles disclosed herein without departing from the scope of the invention.

### Examples

### Example 1 - Preparation of a thermally conductive silicone composition (Formulation 1)

Table 1 summarizes the materials used for the preparation of Formulation 1.

**Table 1**

| | Material | Mw (g/mole) | Kinematic viscosity (cSt) | Average particle size (µm) | Weight (g) |
|---|---|---|---|---|---|
| Component (A) | Vinyl terminated polydimethylsiloxane | 28,000 | 1,000 | | 3.35 |
| Component (B) | (25-35% methylhydrosiloxane) - dimethylsiloxane copolymer, trimethylsiloxane terminated | 1,900-2,000 | 25-35 | | 0.0167 |
| Component (C) | Polydimethylsiloxane, trimethylsiloxy terminated | 13,650 | 350 | | 3.37 |
| Catalyst | Platinum-divinyltetramethyldisiloxane complex | | | | 1.115·10⁻³ |
| Inhibitor | Dimethyl maleate | | | | 0.134·10⁻³ |
| Heat transfer filler | Al₂O₃ - based powder | | | 10* | 101.03 |

| | | | | | |
|---|---|---|---|---|---|
| * D50 was measured using Mastersizer 3000 (Malvern Panalytical) and refers to the median particle size of the entire composition of the Al₂O₃ - based powder. | | | | | |

Formulation 1 was prepared according to the following procedure:
Each one of Component (B), catalyst, and inhibitor solutions were individually diluted with a portion of Component (A) solution and mixed in a planetary mixer. The weights of the solutions used for dilution are listed in Table 2.

**Table 2**

| Component that is mixed with Component (A) | Weight of the component that is mixed with Component (A) (mg) | Weight of Component (A) (g) |
|---|---|---|
| Component (B) | 630 | 30 |
| Catalyst | 55 | 20 |
| Inhibitor | 10 | 30 |

The diluted solutions were used in accordance with Table 1 to obtain the desired amount of Component (A), the catalyst, and the inhibitor.

The diluted solutions of the inhibitor and Component (B) were combined with the remaining amount of Component (A) and Component (C), and mixed in the planetary mixer for 2 minutes at 1500 rpm.

A first portion of the heat transfer filler ceramic powder (30 wt.%) was added to the silicone matrix mixture following cooling of the mixture below 30°C, and the mixture was mixed in the planetary mixer for 2 minutes at 1500 rpm.

A second portion of the heat transfer filler ceramic powder (70 wt.%) was added to the silicone matrix and the heat transfer filler mixture following cooling of the mixture below 30°C, and the mixture containing the entire amount of the filler was mixed in the planetary mixer for 2-3 minutes at 1000-2000 rpm, by first decreasing the mixing rate from 2000 rpm to 1000 rpm and then increasing to 1800 rpm and mixing under 30kPa pressure and then decreasing again to 1000 rpm. The mixture was then cooled to room temperature and the same mixing procedure was repeated.

The diluted catalyst solution was added to the silicone matrix-heat transfer filler mixture and mixed in the planetary mixer for about 3 minutes at 1500-1800 rpm. The resultant mixture was left to cure at room temperature (i.e., 25°C) for 48 hours.

The weight ratio between the silicone matrix and the heat transfer filler in Formulation 1 was 1:15.

### Example 2 - Preparation of a thermally conductive silicone composition (Formulation 2)

Table 3 summarizes the materials used for the preparation of Formulation 2.

**Table 3**

| | Material | Mw (g/mole) | Kinematic viscosity (cSt) | D50 (µm) | Weight (g) |
|---|---|---|---|---|---|
| Component (A) | Vinyl terminated polydimethylsiloxane | 28,000 | 1,000 | | 3.35 |
| Component (B) | (25-35% methylhydrosiloxane) - dimethylsiloxane copolymer, trimethylsiloxane terminated | 1,900-2,000 | 25-35 | | 0.0167 |
| Component (C) | Polydimethylsiloxane, trimethylsiloxy terminated | 13,650 | 350 | | 3.37 |
| Catalyst | Platinum-divinyltetramethyldisiloxane complex | | | | 1.115·10⁻³ |
| Inhibitor | Dimethyl maleate | | | | 0.134·10⁻³ |
| Heat transfer filler | Al₂O₃ - based powder | | | 11* | 101.03 |

| | | | | | |
|---|---|---|---|---|---|
| * D50 refers to the median particle size of the entire composition of the Al₂O₃ - based powder. | | | | | |

Formulation 2 was prepared according to the procedure described in Example 1, using the materials listed in Table 3. The weight ratio between the silicone matrix and the heat transfer filler in Formulation 2 was 1:15. Formulation 2 contains a different aluminum oxide powder (having, *inter alia,* a different average particle size).

### Example 3 - Preparation of a thermally conductive silicone composition (Formulation 3)

Table 4 summarizes the materials used for the preparation of Formulation 3.

**Table 4**

| | Material | Mw (g/mole) | Kinematic viscosity (cSt) | D50 (µm) | Weight (g) |
|---|---|---|---|---|---|
| Component (A) | Vinyl terminated polydimethylsiloxane | 28,000 | 1,000 | | 3.35 |
| Component (B) | (25-35% methylhydrosiloxane) - dimethylsiloxane copolymer, trimethylsiloxane terminated | 1,900-2,000 | 25-35 | | 0.0167 |
| Component (C) | Polydimethylsiloxane, trimethylsiloxy terminated | 13,650 | 350 | | 3.37 |
| Catalyst | Platinum-divinyltetramethyldisiloxane complex | | | | 1.115·10⁻³ |
| Inhibitor | Dimethyl maleate | | | | 0.134·10⁻³ |
| Heat transfer filler | Al₂O₃ - based powder | | | 10* | 107.77 |

| | | | | | |
|---|---|---|---|---|---|
| * D50 was measured using Mastersizer 3000 (Malvern Panalytical) and refers to the median particle size of the entire composition of the Al₂O₃ - based powder. | | | | | |

Formulation 3 was prepared according to the procedure described in Example 1, using the materials listed in Table 4. The weight ratio between the silicone matrix and the heat transfer filler in Formulation 3 was 1: 16.

### Example 4 - Thermal conductivity measurement of the thermally conductive silicone compositions

The thermal conductivity of cured Formulations 1-3 was measured by HotDisk ISO 22007-2 in batch mode at 21-25°C at the following conditions: 250 mW and 5 sec.

### Example 5 - Flow rate measurement of the thermally conductive silicone compositions

The cured formulations were mixed in the planetary mixer for 2 minutes at 1800 rpm and cooled down to 25°C. A 30 ml syringe with no tip attachment and a 0.254 cm orifice was filled with the formulation to be tested. The syringe was connected to an automatic dispenser (BOSCOM B800) and the dispenser was operated for 10 seconds at a pressure of 90 PSI. The formulation extruded by the automatic dispenser was measured on a precision scale having an accuracy of at least 0.005 g, and the flow rate was calculated by dividing the weight by the time during which the formulation was dispensed (in minutes). The test was performed three times with each formulation and the average flowrate was reported. The test was based on ASTM D1238.

### Example 6 - Thermal conductivity and flowrate measurement results

The results of the thermal conductivity and flow rate tests are detailed in Table 5.

**Table 5**

| | Thermal conductivity (W/mK) | Flow rate (g/min) |
|---|---|---|
| Formulation 1 | 3.79 | 77.35 |
| Formulation 2 | 3.84 | 142.03 |
| Formulation 3 | 3.94 | 55.80 |

Formulations 1-3 are characterized by thermal conductivity of above 3.5 W/mK and a flow rate of above 50 g/min, thereby providing the desired mechanical and thermal properties of the thermally conductive silicone composition.

### Clauses:

Clause 1. A thermally conductive silicone composition comprising:
a silicone matrix comprising:
   Component (A) - a polyorganosiloxane containing two silicon-bonded terminal alkenyl groups per molecule and having a molecular weight that is below about 70,000 g/mole and a kinematic viscosity ranging from about 250 cSt to about 15,000 cSt at 25°C;
   Component (B) - trimethylsiloxane terminated (methylhydrosiloxane - dimethylsiloxane) copolymer, comprising from about 15% to about 50% methylhydrosiloxane, wherein the number of silicon-bonded hydrogen atoms contained therein is 0.1 to 0.5 per alkenyl group contained in Component (A); and
   Component (C) - a trimethylsiloxy terminated polydimethylsiloxane having a molecular weight ranging between about 5,000 g/mole and 50,000 g/mole and a kinematic viscosity ranging from about 50 cSt to about 1,000 cSt at 25°C, being present in a weight percent of at least about 20 wt.%, based on the total weight of the silicone matrix, and
a heat transfer filler comprising:
   a ceramic powder having a thermal conductivity of at least about 10 W/mK comprising at least about 40 wt.% of aluminum oxide (Al₂O₃) having an average particle size of less than about 100 µm,
wherein the weight ratio between the heat transfer filler and the silicone matrix is above 11:1.

Clause 2. The thermally conductive silicone composition of clause 1, wherein the silicone matrix further comprises a catalyst for a hydrosilylation reaction between Component (A) and Component (B).

Clause 3. The thermally conductive silicone composition of clause 2, wherein the catalyst comprises platinum group metal or a platinum group metal-containing compound.

Clause 4. The thermally conductive silicone composition of clause 2 or clause 3, wherein the catalyst is selected from the group consisting of platinum, rhodium, palladium, platinum chloride, chloroplatinic acid, and salts and complexes thereof.

Clause 5. The thermally conductive silicone composition of clause 4, wherein the catalyst comprises a platinum 1,3-diethenyl-1,1,3,3-tetramethyldisiloxane complex.

Clause 6. The thermally conductive silicone composition of any one of clauses 3 to 5, wherein the platinum group metal is present in an amount ranging from about 0.1 ppm to about 100 ppm, based on the total weight of the silicone matrix.

Clause 7. The thermally conductive silicone composition of any one of clauses 2 to 6, wherein the silicone matrix further comprises an inhibitor of the hydrosilylation reaction between Component (A) and Component (B).

Clause 8. The thermally conductive silicone composition of clause 7, wherein the inhibitor is selected from the group consisting of an unsaturated hydrocarbon monoester, unsaturated hydrocarbon diester, ethylenically or aromatically unsaturated amide, acetylenic compound, silylated acetylenic compound, ethylenically unsaturated isocyanate, olefinic siloxane, vinylcyclosiloxane, fumarate/alcohol mixture, conjugated ene-yne, diaziridine, ethynyl cyclohexanol, and any combination thereof.

Clause 9. The thermally conductive silicone composition of clause 8, wherein the inhibitor comprises dimethyl maleate.

Clause 10. The thermally conductive silicone composition of any one of clauses 7 to 9, wherein the inhibitor is present in an amount ranging from about 0.5 ppm to about 500 ppm, based on the total weight of the silicone matrix.

Clause 11. The thermally conductive silicone composition of any one of clauses 7 to 10, wherein the molar ratio between the inhibitor and the catalyst ranges from about 0.25: 1 to about 20:1.

Clause 12. The thermally conductive silicone composition of any one of clauses 1 to 11, wherein Component (C) is present in a weight percent ranging from about 30 wt.% to about 70 wt.%, based on the total weight of the silicone matrix.

Clause 13. The thermally conductive silicone composition of clause 12, wherein Component (C) is present in a weight percent ranging from about 40 wt.% to about 60 wt.%, bsed on the total weight of the silicone matrix.

Clause 14. The thermally conductive silicone composition of clause 13, wherein Component (C) is present in a weight percent of about 50 wt.%, based on the total weight of the silicone matrix.

Clause 15. The thermally conductive silicone composition of any one of clauses 1 to 14, wherein the alkenyl group is selected from the group consisting of a vinyl group, allyl group, 1-butenyl group, 1-hexenyl group, and a combination thereof.

Clause 16. The thermally conductive silicone composition of any one of clauses 1 to 15, wherein Component (A) comprises vinyl terminated polydimethylsiloxane.

Clause 17. The thermally conductive silicone composition of any one of clauses 1 to 16, wherein Component (A) is present in a weight percent ranging from about 30 wt.% to about 80 wt.%, based on the total weight of the silicone matrix.

Clause 18. The thermally conductive silicone composition of clause 17, wherein Component (A) is present in a weight percent ranging from about 40 wt.% to about 60 wt.%, based on the total weight of the silicone matrix.

Clause 19. The thermally conductive silicone composition of clause 18, wherein Component (A) is present in a weight percent of about 50 wt.%, based on the total weight of the silicone matrix.

Clause 20. The thermally conductive silicone composition of any one of clauses 1 to 19, wherein the weight ratio between Component (A) and Component (C) ranges from about 1:1.5 to about 1.5:1.

Clause 21. The thermally conductive silicone composition of any one of clauses 1 to 20, wherein Component (B) is present in a weight percent ranging from about 0.03 wt.% to about 2 wt.%, based on the total weight of the silicone matrix.

Clause 22. The thermally conductive silicone composition of clause 21, wherein the weight ratio between Component (A) and Component (B) ranges from about 500:1 to about 50:1.

Clause 23. The thermally conductive silicone composition of any one of clauses 1 to 22, wherein the molecular weight of Component (C) ranges from about 10,000 g/mole to about 20,000 g/mole.

Clause 24. The thermally conductive silicone composition of clause 23, wherein the molecular weight of Component (C) ranges from about 12,000 g/mole to about 15,000 g/mole.

Clause 25. The thermally conductive silicone composition of any one of clauses 1 to 24, wherein the kinematic viscosity of Component (C) ranges from about 200 cSt to about 500 cSt.

Clause 26. The thermally conductive silicone composition of any one of clauses 1 to 25, wherein the molecular weight of Component (A) ranges from about 15,000 g/mole to about 50,000 g/mole.

Clause 27. The thermally conductive silicone composition of clause 26, wherein the molecular weight of Component (A) ranges from about 25,000 g/mole to about 35,000 g/mole.

Clause 28. The thermally conductive silicone composition of any one of clauses 1 to 27, wherein the kinematic viscosity of Component (A) ranges from about 500 cSt to about 2,000 cSt at 25°C.

Clause 29. The thermally conductive silicone composition of any one of clauses 1 to 28, wherein Component (B) comprises from about 25% to about 35% methylhydrosiloxane.

Clause 30. The thermally conductive silicone composition of any one of clauses 1 to 29, wherein Component (B) has a molecular weight ranging from about 500 g/mole to about 5000 g/mole.

Clause 31. The thermally conductive silicone composition of clause 30, wherein the molecular weight of Component (B) ranges from about 1000 g/mole to about 3000 g/mole.

Clause 32. The thermally conductive silicone composition of any one of clauses 1 to 31, wherein Component (B) has a kinematic viscosity ranging from about 5 to about 200 cSt.

Clause 33. The thermally conductive silicone composition of clause 32, wherein the kinematic viscosity of Component (B) ranges from about 20 to about 50 cSt.

Clause 34. The thermally conductive silicone composition of any one of clauses 1 to 33, wherein the number of silicon-bonded hydrogen atoms contained in Component (B) ranges from about 0.2 to about 0.3 per alkenyl group contained in component (A).

Clause 35. The thermally conductive silicone composition of any one of clauses 1 to 34, wherein the weight ratio between the heat transfer filler and the silicone matrix is above 13:1.

Clause 36. The thermally conductive silicone composition of any one of clauses 1 to 35, wherein the weight ratio between the heat transfer filler and the silicone matrix is between about 15:1 and 16:1.

Clause 37. The thermally conductive silicone composition of any one of clauses 1 to 36, wherein aluminum oxide is present in the ceramic powder in a weight percent of at least about 75 wt.%

Clause 38. The thermally conductive silicone composition of any one of clauses 1 to 37, wherein the ceramic powder further comprises at least one of aluminum nitride (AlN), zinc oxide (ZnO), magnesium oxide (MgO), beryllium oxide (BeO), chromium oxide (Cr₂O₃), titanium oxide (TiO₂), boron nitride (BN), boron carbide (B₄C), titanium carbide (TiC), silicon nitride (Si₃N₄), and silicon carbide (SiC).

Clause 39. The thermally conductive silicone composition of any one of clauses 1 to 38, wherein the ceramic powder further comprises zinc oxide.

Clause 40. The thermally conductive silicone composition of clause 39, wherein zinc oxide is present in a weight percent of less than about 50%, based on the total weight of the heat transfer filler.

Clause 41. The thermally conductive silicone composition of clause 39 or clause 40, wherein zinc oxide has an average particle size of less than about 1 µm.

Clause 42. The thermally conductive silicone composition of any one of clauses 1 to 41, wherein aluminum oxide has a multimodal particle size distribution, having at least a first average particle size ranging from about 1 µm to about 20 µm and a second average particle size ranging from about 40 µm to about 80 µm.

Clause 43. The thermally conductive silicone composition of any one of clauses 1 to 42, wherein aluminum oxide has particles of an essentially spherical shape.

Clause 44. The thermally conductive silicone composition of any one of clauses 1 to 43, wherein the ceramic powder is treated with an organo-silane.

Clause 45. The thermally conductive silicone composition of clause 44, wherein the organo-silane is selected from the group consisting of n-octyltriethoxysilane, n-octyltrimethoxysilane, tetraethoxysilane hexatrimethoxysilane, allyltrimethoxysilane, and combinations thereof.

Clause 46. The thermally conductive silicone composition of clause 44 or clause 45, wherein the organo-silane is present in a weight percent ranging from about 0.2% to about 2% of the total weight of the heat transfer filler.

Clause 47. A thermal paste comprising the thermally conductive silicone composition of any one of clauses 1 to 46, wherein Component (A) is at least partially crosslinked by (Component (B).

Clause 48. The thermal paste of clause 47 that is obtained by combining components of the thermally conductive silicone composition of any one of clauses 1 to 46.

Clause 49. The thermal paste of clause 48, that is obtained by mixing Component (A), Component (B), Component (C) and the heat transfer filler and then mixing the obtained mixture with the catalyst and curing.

Clause 50. The thermal paste of clause 48, that is obtained by mixing Component (A), Component (B), Component (C) with the catalyst and curing and then mixing the obtained cured mixture with the heat transfer filler.

Clause 51. The thermal paste of any one of clauses 47 to 50, having a thermal conductivity of at least about 2.5 W/mK.

Clause 52. The thermal paste of any one of clauses 47 to 51, having a flow rate of at least about 50 g/min.

Clause 53. The thermal paste of clause 49 or clause 50, wherein the mixing is performed at a temperature ranging from about 10°C to about 100°C.

Clause 54. A heat dissipation component comprising the thermal paste of any one of clauses 47 to 53.

Clause 55. An electronic device or component for use in a renewable energy generation and/or energy storage system, comprising the thermal paste of any one of clauses 47 to 53.

Clause 56. The electronic device or component of clause 55, selected from a heatsink, heat spreader, photovoltaic cell, battery packaging, power optimizer, voltage inverter, CPU, field effect transistor, or a combination thereof.

While the present invention has been particularly described, persons skilled in the art may appreciate that many variations and modifications may be made. Therefore, the invention is not to be construed as restricted to the particularly described embodiments, and the scope and concept of the invention may be more readily understood by reference to the claims, which follow.

## Claims

1. A thermally conductive silicone composition comprising:
a silicone matrix comprising:
Component (A) - a polyorganosiloxane containing two silicon-bonded terminal alkenyl groups per molecule and having a molecular weight that is below about 70,000 g/mole and a kinematic viscosity ranging from about 250 cSt to about 15,000 cSt at 25°C;
Component (B) - trimethylsiloxane terminated (methylhydrosiloxane - dimethylsiloxane) copolymer comprising from about 15% to about 50% methylhydrosiloxane, wherein the number of silicon-bonded hydrogen atoms contained therein is 0.1 to 0.5 per alkenyl group contained in Component (A); and
Component (C) - a trimethylsiloxy terminated polydimethylsiloxane having a molecular weight ranging between about 5,000 g/mole and 50,000 g/mole and a kinematic viscosity ranging from about 50 cSt to about 1,000 cSt at 25°C, being present in a weight percent of at least about 20 wt.%, based on the total weight of the silicone matrix, and
a heat transfer filler comprising:
a ceramic powder having a thermal conductivity of at least about 10 W/mK comprising at least about 40 wt.% of aluminum oxide (Al₂O₃) having an average particle size of less than about 100 µm,
wherein the weight ratio between the heat transfer filler and the silicone matrix is above 11:1.

2. The thermally conductive silicone composition of claim 1, wherein the silicone matrix further comprises a catalyst for a hydrosilylation reaction between Component (A) and Component (B).

3. The thermally conductive silicone composition of claim 2, wherein the catalyst is selected from the group consisting of platinum, rhodium, palladium, platinum chloride, chloroplatinic acid, and salts and complexes thereof.

4. The thermally conductive silicone composition of claim 3, wherein the catalyst comprises a platinum 1,3-diethenyl-1,1,3,3-tetramethyldisiloxane complex.

5. The thermally conductive silicone composition of claim 3 or claim 4, wherein the platinum group metal is present in an amount ranging from about 0.1 ppm to about 100 ppm, based on the total weight of the silicone matrix.

6. The thermally conductive silicone composition of any one of claims 2 to 5, wherein the silicone matrix further comprises an inhibitor of the hydrosilylation reaction between Component (A) and Component (B).

7. The thermally conductive silicone composition of claim 6, wherein the inhibitor is selected from the group consisting of an unsaturated hydrocarbon monoester, unsaturated hydrocarbon diester, ethylenically or aromatically unsaturated amide, acetylenic compound, silylated acetylenic compound, ethylenically unsaturated isocyanate, olefinic siloxane, vinylcyclosiloxane, fumarate/alcohol mixture, conjugated ene-yne, diaziridine, ethynyl and any combination thereof.

8. The thermally conductive silicone composition of claim 7, wherein the inhibitor comprises dimethyl maleate.

9. The thermally conductive silicone composition of any one of claims 6 to 8, wherein the inhibitor is present in an amount ranging from about 0.5 ppm to about 500 ppm, based on the total weight of the silicone matrix.

10. The thermally conductive silicone composition of any one of claims 6 to 9, wherein the molar ratio between the inhibitor and the catalyst ranges from about 0.25: 1 to about 20:1.

11. The thermally conductive silicone composition of any one of claims 1 to 10, wherein Component (C) is present in a weight percent ranging from about 30 wt.% to about 70 wt.%, based on the total weight of the silicone matrix.

12. The thermally conductive silicone composition of claim 11, wherein Component (C) is present in a weight percent ranging from about 40 wt.% to about 60 wt.%, based on the total weight of the silicone matrix.

13. The thermally conductive silicone composition of claim 12, wherein Component (C) is present in a weight percent of about 50 wt.%, based on the total weight of the silicone matrix.

14. The thermally conductive silicone composition of any one of claims 1 to 13, wherein each alkenyl group is selected from the group consisting of a vinyl group, allyl group, 1-butenyl group, 1-hexenyl group, and a combination thereof.

15. The thermally conductive silicone composition of any one of claims 1 to 14, wherein Component (A) comprises vinyl terminated polydimethylsiloxane.
